Europäisches Patentamt

European Patent Office

Office européen des brevets

(11) Veröffentlichungsnummer: **0 258 788**
**B1**

(12) **EUROPÄISCHE PATENTSCHRIFT**

(45) Veröffentlichungstag der Patentschrift:
**30.05.90**

(51) Int. Cl.⁵: **C08F 10/06, C08F 4/64**

(21) Anmeldenummer: **87112315.4**

(22) Anmeldetag: **25.08.87**

(54) **Verfahren zum Herstellen von Homo- und Copolymerisaten des Propylens mittels eines Ziegler-Natta-Katalysatorsystems.**

(30) Priorität: **30.08.86 DE 3629583**

(43) Veröffentlichungstag der Anmeldung:
**09.03.88 Patentblatt 88/10**

(45) Bekanntmachung des Hinweises auf die Patenterteilung:
**30.05.90 Patentblatt 90/22**

(84) Benannte Vertragsstaaten:
**AT BE DE ES FR GB IT NL**

(56) Entgegenhaltungen:
**EP-A- 0 133 267**
**DE-A- 3 428 478**
**FR-A- 2 516 520**

(73) Patentinhaber: **BASF Aktiengesellschaft,
Carl-Bosch-Strasse 38, D-6700 Ludwigshafen(DE)**

(72) Erfinder: **Zolk, Ralf, Dr., Gerhard-Hauptmann-Strasse 33,
D-6717 Hessheim(DE)**
Erfinder: **Kerth, Juergen, Dr., Hardenburgstrasse 2,
D-6701 Maxdorf(DE)**
Erfinder: **Werner, Rainer Alexander, Dr., Berliner
Strasse 14, D-6702 Bad Duerkheim(DE)**
Erfinder: **Schweier, Guenther, Dr.,
Friedrich-Pietzsch-Strasse 14, D-6701 Friedelsheim(DE)**

**Beschreibung**

Die vorliegende Erfindung betrifft ein Verfahren zum Herstellen von Homopolymerisaten des Propylens sowie insbesondere Copolymerisaten des Propylens mit untergeordneten Mengen anderer $C_2$- bis $C_{12}$-, vorzugsweise $C_2$- bis $C_8$-, insbesondere $C_2$- bis $C_6$-alpha-Monoolefine durch Polymerisation, insbesondere durch Trockenphasenpolymerisation, des bzw. der Monomeren bei Temperaturen von 20 bis 160, vorzugsweise 50 bis 120, insbesondere 50 bis 90°C und Drücken von 1 bis 100, vorzugsweise 8 bis 70, insbesondere 10 bis 50 bar, mittels eines Ziegler-Natta-Katalysatorsystems aus

(1) einer - gegebenenfalls auf einem silikatischen Träger aufgebrachten - Titankomponente aus a Atomteilen Titan, b Atomteilen Magnesium, c Atomteilen Chlor, d Molteilen eines Abkömmlings der Phthalsäure sowie - gegebenenfalls - untergeordneten Mengen anderer Bestandteile, mit der Maßgabe, daß die Beziehungen gegeben sind
$b = 4.a$ bis $50.a$, vorzugsweise $6.a$ bis $25.a$,
$c = 2.a + b$ bis $4.a + 2.b$, vorzugsweise $2.a + 1,5.b$ bis $4.a + 2.b$,
$d = 0,02.b$ bis $0,40.b$, vorzugsweise $0,05.b$ bis $0,25.b$,
(2) einem Aluminiumalkyl der Formel $AlR_3$, worin R steht für einen nicht mehr als 8, vorzugsweise nicht mehr als 5 Kohlenstoffatome aufweisenden Alkylrest, sowie
(3) einer Alkoxygruppen aufweisenden Siliziumverbindung als Cokatalysator

mit den Maßgaben, daß das Atomverhältnis Titan aus der Titankomponente (1): Aluminium aus dem Aluminiumalkyl (2) 1:20 bis 1:1000, vorzugsweise 1:40 bis 1:500, und das Molverhältnis Aluminiumalkyl (2) : Cokatalysator (3) 10:8 bis 10:0,1, vorzugsweise 10:5 bis 10:0,5 beträgt.

Polymerisationsverfahren dieser Art sind bekannt und z.B. in der EP-OS 17 895 (= US Serial Nr. 127 086) und der AU-PS 543 049 beschrieben.

Spezielle Ausgestaltungen der für derartige Verfahren verwendeten Katalysatorsyteme werden im allgemeinen vorgenommen, um bestimmte Ziele zu erreichen, wie die folgenden:

Das Katalysatorsystem soll eine erhöhte Ausbeute an Polymerisat, welches einen möglichst großen isotaktischen Anteil zu enthalten hat, liefern.

Zusätzlich ist - besonders im Hinblick auf die Thermodynamik der Verfahrensführung - eine leichte Molekulargewichtsregelung, insbesondere mit Wasserstoff, von großer Bedeutung.

Das Katalysatorsystem soll darüber hinaus Polymerisate mit speziellen morphologischen Eigenschaften erzeugen, etwa im Sinne einer einheitlichen Korngröße und/oder einer Verringerung der Feinstkornanteile und/oder eines hohen Schüttgewichts.

Nach den bisherigen Erfahrungen läßt sich nur ein Teil der genannten Ziele zugleich erreichen, wobei andere zurückgesetzt werden müssen.

Dies zeigt z.B. auch das in der EP-OS 45 977 beschriebene Polymerisationsverfahren, bei dem durch verschiedene Maßnahmen in einem gegebenen Katalysatorsystem zwar eine Erhöhung der Produktivität zu erreichen ist, jedoch zugleich eine z.T. drastische Verschlechterung der Stereospezifität hingenommen werden muß.

Eine gute Stereospezifität des Katalysatorsystems und damit eine hohe Isotaktizität und Kristallinität des Polymerisats ist indes nicht zuletzt im Hinblick auf die Herstellung von Random- und Blockcopolymerisaten von großer Bedeutung. Da bei Einsatz von Comonomeren der lösliche Anteil erhöht und damit die Steifigkeit erniedrigt wird, wird es durch höhere Stereospezifität möglich, bei gleicher Steifigkeit mehr Comonomeres einzubauen und damit eine bessere Schlagzähigkeit zu erreichen. Entsprechend kann bei gleicher Comonomermenge und damit gleicher Schlagzähigkeit ein Polymerisat mit verbesserter Steifigkeit erhalten werden.

Hier setzt die Aufgabenstellung an, die zur vorliegenden Erfindung geführt hat: Eine neue Ausgestaltung des in Rede stehenden Ziegler-Natta-Katalysatorsystems aufzuzeigen, mit der man gegenüber bekannten Ausgestaltungen - unter vergleichbarer Zielsetzung - bessere Ergebnisse bezüglich hoher Sterospezifität bei gleichzeitig guter Produktivität bei der Homopolymerisation und insbesondere der Copolymerisation erreichen kann.

Es wurde gefunden, daß die gestellte Aufgabe gelöst werden kann, wenn man beim eingangs definierten Polymerisationsverfahren ein Katalysatorsytem einsetzt, das als Cokatalysator (3) eine bestimmte, speziell ausgewählte Art von Alkoxygruppen aufweisenden Siliziumverbindungen enthält.

Gegenstand der vorliegenden Erfindung is dementsprechend ein Verfahren zum Herstellen von Homopolymerisaten des Propylens sowie insbesondere Copolymerisaten des Propylens mit untergeordneten Mengen anderer $C_2$- bis $C_{12}$-, vorzugsweise $C_2$- bis $C_8$, insbesondere $C_2$- bis $C_6$-alpha-Monoolefine durch Polymerisation, insbesondere durch Trockenphasenpolymerisation, des bzw. der Monomeren bei Temperaturen von 20 bis 160, vorzugsweise 50 bis 120, insbesondere 50 bis 90°C und Drücken von 1 bis 100, vorzugsweise 8 bis 70, insbesondere 10 bis 50 bar, mittels eines Ziegler-Natta-Katalysatorsystems aus

(1) einer - gegebenenfalls auf einem silikatischen Träger aufgebrachten - Titankompenente aus a Atomteilen Titan, b Atomteilen Magnesium, c Atomteilen Chlor, d Molteilen eines Abkömmlings der Phthalsäure sowie - gegebenenfalls - untergeordnete Mengen anderer Bestandteile, mit der Maßgabe, daß die Beziehungen gegeben sind
$b = 4.a$ bis $50.a$, vorzugsweise $6.a$ bis $25.a$,
$c = 2.a + b$ bis $4.a + 2.b$, vorzugsweise $2.a + 1,5.b$ bis $4.a + 2.b$,
$d = 0,02.b$ bis $0,40.b$, vorzugsweise $0,05.b$ bis $0,25.b$,
(2) einem Aluminiumalkyl der Formel $AlR_3$, worin R steht für einen nicht mehr als 8, vorzugsweise nicht mehr als 5 Kohlenstoffatome aufweisenden Alkylrest, sowie
(3) einer Alkoxygruppen aufweisenden Siliziumverbindung als Cokatalysator,

mit den Maßgaben, daß das Atomverhältnis Titan aus der Titankomponente (1): Aluminium aus dem Aluminiumalkyl (2) 1:20 bis 1:1000, vorzugsweise 1:40 bis 1:500, und das Molverhältnis Aluminiumalkyl (2): Cokatalysator (3) 10:8 bis 10:0,01, vorzugsweise 10:5 bis 10:0,5 beträgt.

Das erfindungsgemäße Verfahren ist dadurch gekennzeichnet, daß ein Katalysatorsystem eingesetzt wird, das als Cokatalysator (3) enthält eine Siliziumverbindung der Zusammensetzung.

$(R^1_{5-n} R^2_n C_6)_x Si(OR^3)_{4-x}$,

wobei stehen

$C_6$ für einen Benzolkern,

$R^1$ für einen $C_1$- bis $C_{10}$-, vorzugsweise $C_1$- bis $C_8$-Kohlenwasserstoffrest, insbesondere eine $C_1$- bis $C_4$-Alkylgruppe, oder für H,

$R^2$ für einen $C_1$- bis $C_{10}$-, vorzugsweise $C_1$- bis $C_8$-Kohlenwasserstoffrest, insbesondere eine $C_1$- bis $C_4$-Alkylgruppe,

oder $R^1$ sowie $R^2$ für eine Gruppe $OR^4$, wobei $R^1$ von $R^2$ verschieden ist und $R^4$ für $R^2$ steht,

$R^3$ für einen $C_1$- bis $C_6$-Kohlenwasserstoffrest, insbesondere eine $C_1$- bis $C_4$-Alkylgruppe,

n für eine Zahl im Bereich von 1 bis 5, vorzugsweise 1 bis 3 und

x für eine Zahl im Bereich von 1 bis 3, vorzugsweise 1 oder 2.

Zum erfindungsgemäßen Verfahren is noch das folgende zu bemerken:

Das Polymerisationsverfahren als solches kann - unter Beachtung der kennzeichnenden Besonderheit - in praktisch allen einschlägig üblichen technologischen Ausgestaltungen durchgeführt werden, etwa als diskontinuierliches, taktweises oder - insbesondere - kontinuierliches Verfahren, sei es z.B. als Suspensions-Polymerisationsverfahren oder - insbesondere - Trockenphasen-Polymerisationsverfahren. Die erwähnten technologischen Ausgestaltungen - mit anderen Worten: die technologischen Varianten der Polymerisation von alpha-Monoolefinen nach Ziegler-Natta - sind aus der Literatur und Praxis wohlbekannt, so daß sich nähere Ausführungen zu ihnen erübrigen.

Die stoffliche Seite des neuen Katalysatorsystems betreffend ist im einzelnen zu sagen:

(1) Die - gegebenenfalls auf einem silikatischen Träger aufgebrachte - Titankomponente enthält als wirksame Bestandteile a Atomteile Titan, b Atomteile Magnesium, c Atomteile Chlor, d Molteile eines Abkömmlings der Phthalsäure sowie - gegebenenfalls - untergeordnete Mengen anderer Bestandteile, mit der Maßgabe, daß die Beziehungen gegeben sind.

$b = 4.a$ bis $50.a$, vorzugsweise $6.a$ bis $25.a$,

$c = 2.a + b$ bis $4.a + 2.b$, vorzugsweise $2.a + 1,5.b$ bis $4.a + 2.b$,

$d = 0,02.b$ bis $0,40.b$, vorzugsweise $0,05.b$ bis $0,25.b$.

Solche, für den erfindungsgemäßen Zweck gut geeignete Katalysatorkomponenten sind z. B. beschrieben in der EP-OS 45 977 und in den DE-OSen 33 27 520 (= US Serial Nr. 636 025), 33 42 039 (= US-PS 4 579 919), 34 04 669, 34 11 197, 34 28 478 sowie 34 32 759.

Wie sich gezeigt hat, können für den erfindungsgemäßen Zweck besonders gut geeignete Katalysatorkomponenten (1) erhalten werden gemäß den nachstehenden vier Herstellmethoden.

I

Es wird so verfahren, daß man

(1.1) in einer ersten Stufe
(1.1.1) Titantetrachlorid
(1.1.2.) eine, einen Teilchendurchmesser von 0,6-2,8 mm aufweisende Komplexverbindung der Zusammensetzung $MgCl_2 (n\text{-BuOH})_{3,5}$
(1.1.3) Phthalsäuredichlorid
- wobei mengenmäßig eingesetzt werden auf 100 Molteile Titantetrachlorid 5 Molteile Komplexverbindung und auf 100 Molteile Komplexverbindung, 33 Molteile Phthalsäurechlorid - unter ständiger Durchmischung mittels kräftigem Rühren zunächst bei 20°C Titantetrachlorid, die Komplexverbindung und Phthalsäuredichlorid zusammenbringt, den Mischvorgang während 0,5 Stunden bei 120°C fortsetzt und das dabei resultierende fest Zwischenprodukt unter Abtrennung der verbleibenden flüssigen Phase durch Absaugen mittels einer Glasfritte und Waschen mit n-Heptan bis zur Farblosigkeit der Waschflüssigkeit isoliert, hierauf
(1.2) in einer zweiten Stufe
100 g des festen Zwischenproduktes aus (1.1) zweimal mit je 500 ml Titantetrachlorid bei 125°C über eine Zeitspanne von 0,75 h behandelt, anschließend durch Filtration die flüssige Phase vom resultierenden Feststoff abtrennt und schließlich
(1.3) in einer dritten Stufe
die im Feststoff verbliebene flüssige Phase solange mit n-Heptan wäscht, bis dieses keine Fremdstoffe mehr aufnimmt und nach Trocknen die Titankomponente (1) isoliert.

II

Oder man verfährt so, daß man

(1.1) in einer ersten Stufe
(1.1.1) in Heptan
(1.1.2) ein, einen Teilchendurchmesser von 0,08 bis 0,2 mm aufweisendes Magnesiumchlorid,
(1.1.3) Ethanol,
(1.1.4) Phthalsäuredi-n-butylester und
(1.1.5) Titantetrachlorid
- wobei mengenmäßig eingesetzt werden auf 100 Molteile Heptan 15 Molteile Magnesiumchlorid, auf 100 Molteile Magnesiumchlorid 300 Molteile Ethanol und 20 Molteile Phthalsäuredi-n-butylester sowie auf 100 Molteile Ethanol 200 Molteile Titantetrachlorid - derart miteinander umsetzt, daß man zunächst
(1.1.A) unter ständiger Durchmischung mittels kräftigem Rühren zunächst bei 20°C die Magnesiumverbindung, den Alkohol und den Phthalsäureabkömmling zusammenbringt, den Mischvorgang während 1 Stunde fortsetzt und die Temperatur bei 95°C hält, anschließend
(1.1.B) unter ständiger Durchmischung mittels kräftigem Rühren das Titantetrachlorid bei 20°C zugibt, das Gemisch auf 95°C aufwärmt, 1,5 Stunde bei dieser Temperatur hält und das dabei resultierende feste Zwischenprodukt unter Abtrennung der verbleibenden flüssigen Phase durch Absaugen auf einer Glasfritte isoliert, hierauf

(1.2) in einer zweiten Stufe

50 g des festen Zwischenproduktes aus (1.1) 2 Stunden mit 500 ml Ethylbenzol bei 125°C extrahiert, anschließend durch Filtration die flüssige Phase vom resultierenden Feststoff abtrennt und schließlich

(1.3) in einer dritten Stufe

die im Feststoff verbliebene flüssige Phase durch 3-maliges Waschen mit n-Heptan - wobei mengenmäßig eingesetzt werden auf 100 Gewichtsteile Feststoff pro Waschschritt 350 Volumenteile n-Heptan - entfernt und nach Trocknen die Titankomponente (1) isoliert.

III

Zweckmäßig kann man auch so arbeiten, daß man

(1.1) in einer ersten Stufe
(1.1.1) in Heptan
(1.1.2) ein, einen Teilchendurchmesser von 0,08 bis 0,2 mm aufweisendes Magnesiumchlorid,
(1.1.3) Ethanol,
(1.1.4) Phthalsäuredi-n-butylester und
(1.1.5) Titantetrachlorid
-wobei mengenmäßig eingesetzt werden auf 100 Molteile Heptan 15 Molteile Magnesiumchlorid, auf 100 Molteile Magnesiumchloird 300 Molteile Ethanol und 20 Molteile Phthalsäuredi-n-butylester sowie auf 100 Molteile Ethanol 200 Molteile Titantetrachlorid - derart miteinander umsetzt, daß man zunächst (1.1.A) unter ständiger Durchmischung mittels kräftigem Rühren zunächst bei 20°C die Magnesiumverbindung, den Alkohol und den Phthalsäureabkömmling zusammenbringt, den Mischvorgang während 2 Stunden fortsetzt und die Temperatur bei 95°C hält, anschließend

(1.1.B) unter ständiger Durchmischung mittels kräftigem Rühren das Titantetrachlorid bei 20°C zugibt, das Gemisch auf 95°C aufwärmt, 1 Stunde bei dieser Temperatur hält und das dabei resultierende feste Zwischenprodukt unter Abtrennung der verbleibenden flüssigen Phase durch Absaugen auf einer Glasfritte isoliert, hierauf

(1.2) in einer zweiten Stufe

100 g des festen Zwischenproduktes aus (1.1) zweimal mit je 500 ml TiCl$_4$ bei 125°C über eine Zeitspanne von 0,75 h behandelt, anschließend durch Filtration die flüssige Phase vom Feststoff abtrennt und schließlich.

(1.3) in einer dritten Stufe

die im Feststoff verbliebene flüssige Phase durch 4-maliges Waschen mit n-Heptan - wobei mengenmäßig eingesetzt werden auf 100 Gewichtsteile Feststoff pro Waschschritt 350 Volumenteile n-Heptan - entfernt und nach Trocknen die Titankomponente (1) isoliert.

IV

Ferner läßt sich mit besonderem Erfolg so verfahren, daß man

(1.1) in einer ersten Stufe

25,9 g Magnesiumchlorid, suspendiert in 400 ml n-Heptan, unter ständiger Durchmischung mit 137,4 g n-Butanol versetzt und 30 Minuten unter Rückfluß zum Sieden erwärmt, worauf man nach Abkühlen auf 70°C 118 g Siliciumdioxid (Teilchendurchmesser 20-45 µm, Oberfläche 320 m²/g, Porenvolumen 1,75 cm³/g) zugibt, weitere 10 Minuten bei dieser Temperatur rührt und anschließend bei einer Außentemperatur von 55°C das Lösungsmittel im Vakuum entfernt, dann

(1.2) in einer zweiten Stufe

243 g des aus (1.1) erhaltenen Feststoffes bei 25°C unter Rühren in 600 ml n-Heptan suspendiert, innerhalb von 5 Minuten mit 200 ml Titantetrachlorid versetzt und nach Zufügen von 17,2 g Phthalsäuredichlorid 15 Minuten bei 100°C durchmischt, wonach man den so erhaltenen Feststoff von der flüssigen Phase abtrennt und

(1.3) in einer dritten Stufe

den aus (1.2) erhaltenen Feststoff in 1 l Titantetrachlorid suspendiert, 30 Minuten bei 125°C rührt, den nach Filtration zurückbleibenden Feststoff in 1 l Titantetrachlorid suspendiert, 30 Minuten bei 125°C durchmischt, und durch Filtration erneut ein festes Zwischenprodukt gewinnt, hierauf schließlich

(1.4) in einer vierten Stufe

das aus (1.3) erhaltene Zwischenprodukt mit n-Heptan wäscht und trocknet.

(2) Als Aluminiumalkyle (2) mit der oben angegebenen Formel kommen die einschlägig üblichen in Betracht; sie sind aus Literatur und Praxis so wohlbekannt, daß auf sie nich näher eingegangen zu werden braucht. Als herausragender Vertreter sei beispielsweise gennant Triethylaluminium.

(3) Die für das Katalysatorsystem erfindungsgemäß notwendige Siliziumverbindung (3) ist vorzugsweise ein Tri- oder Dialkoxysilan der angegebenen Formel. Gut geeignet sind Di- und Trialkoxysilane mit zwei bzw. einem Mono-, Di- oder Trialkylphenylsubstituenten; besonders gut geeignet sind p-Tolyl, p-Ethylphenyl- und Xylyltrimethoxysilan sowie p-Tolyl-, p-Ethylphenyl- und Xylyltriethoxysilan.

Das neue Polymerisationsverfahren erlaubt es, unter Einsatz des erfindungsgemäßen Katalysatorsystems Homo- und Copolymerisate - auch Blockcopolymerisate - des Propylens herzustellen, wobei geeignete Copolymerisationspartner insbesondere Ethylen, Buten-1, n-Hexen-1, sowie 4-Methylpenten-1, ferner auch n-Octen-1, n-Decen-1 sowie schließlich n-Dodecen-1 sind.

Beispiel

Es wird ein Katalysatorsystem bestehend aus den folgenden Komponenten verwendet:

(1) Die Titankomponente ist gemäß der oben unter (I) aufgeführten Vorschrift hergestellt; sie besteht aus a Atomteilen Titan, b Atomteilen Magnesium, c Atomteilen Chlor und d Molteilen eines Abkömmlings der Phthalsäure, wobei die Beziehungen gegeben sind
b = 14,5.a
c = 3,5.a + 2.b
d = 0,07.b.
(2) Das Aluminiumalkyl ist Triethylaluminium
(3) Der Cokatalysator ist p-Tolyltriethoxysilan.

Polymerisation

Ein Stahlautoklav von 10 l Volumen, ausgerüstet mit einem Rührer, wird mit 50 g Polypropylenpulver, 10 mMol Aluminiumtriethyl als Aluminiumkomponente (2), 1 mMol p-Tolyltriethoxysilan als Silankomponente (3), 5 Normalliter Wasserstoff und 0,05 mMol, gerechnet als Titan, der oben beschriebenen Titankomponente (1) bei 30°C beschickt. Die Reaktortemperatur wird binnen 10 Minuten auf 70°C, der Reaktordruck mittels Aufpressen von gasförmigem Propylen in dieser Zeit auf 27 bar angehoben.

Die eigentliche Polymerisation wird unter ständigem Rühren bei 70°C und 27 bar während 2 Stunden durchgeführt, hierbei verbrauchtes Monomer wird kontinuierlich durch frisches ersetzt. Man erhält 1464 g Polymerisat, entsprechend einer Ergiebigkeit von 18 300 g Polypropylen pro g Titankomponente (1); das Polymerisat weist 2,8% in siedendem Heptan lösliche Anteile (als Maß für die Stereoregularität) auf, seine Grenzviskosität beträgt 1,97 dl/g und seine Schüttdichte 415 g/l.

Vergleichsversuch

Es wird verfahren wie im Beispiel, mit der einzigen Ausnahme, daß als Cokatalysator (3) statt des p-Tolyltriethoxysilans die gleiche Molmenge Phenyltriethoxysilan eingesetzt wird. Man erhält dann 1 406 g Polymerisat entsprechend einer Ergiebigkeit von 17 570 g Polypropylen pro g Titankomponente (1); das Polymerisat weist 4,1 % in siedendem Heptan lösliche Anteile auf; seine Grenzviskosität beträgt 2,05 dl/g und seine Schüttdichte 410 g/l.

**Patentanspruch**

Verfahren zum Herstellen von Homopolymerisaten des Propylens sowie Copolymerisaten des Propylens mit untergeordneten Mengen anderer $C_2$- bis $C_{12}$-alpha-Monoolefine bei Temperaturen von 20 bis 160°C und Drücken von 1 bis 100 bar mittels eines Ziegler-Natta-Katalysatorsystems aus
(1) einer - gegebenenfalls aus einem silikatischen Träger aufgebrachten - Titankomponente aus a Atomteilen Titan, b Atomteilen Magnesium, c Atomteilen Chlor, d Molteilen eines Abkömmlings der Phthalsäure sowie - gegebenenfalls - untergeordneten Mengen anderer Bestandteile, mit der Maßgabe, daß die Beziehungen gegeben sind
b = 4.a bis 50.a,
c = 2.a + b bis 4.a + 2.b,
d = 0,02.b bis 0,40.b,
(2) einem Aluminiumalkyl der Formel AlR³, worin R

steht für einen nicht mehr als 8 Kohlenstoffatome aufweisenden Alkylrest, sowie
(3) einer Alkolxygruppen aufweisenden Siliziumverbindung als Cokatalysator,
mit den Maßgaben, daß das Atomverhältnis Titan aus der Titankomponente (1): Aluminium aus dem Aluminiumalkyl (2) 1:20 bis 1:1 000 und das Molverhältnis Aluminiumalkyl (2): Cokatalysator (3) 10:8 bis 10:0,1 beträgt,
dadurch gekenzeichnet,
daß ein Katalysatorsystem eingesetzt wird, das als Cokatalysator (3) enthält eine Siliziumverbindung der Zusammensetzung
$(R^1_{5-n} R^2_n C_6)_x Si(OR^3)_{4-x}$,
wobei stehen
$C_6$ für einen Benzolkern
$R^1$ für einen $C_1$- bis $C_{10}$-Kohlenwasserstoffrest cder für H,
$R^2$ für einen $C_1$- bis $C_{10}$-Kohlenwasserstoffrest, oder $R^1$ sowie $R^2$ für eine Gruppe $OR^4$, wobei $R^1$ von $R^2$ verschieden ist und $R^4$ für $R^2$ steht,
$R^3$ für einen $C_1$- bis $C_6$-Kohlenwasserstoffrest,
n für eine Zahl im Bereich von 1 bis 5 und
x für eine Zahl im Bereich von 1 bis 3.

**Claim**

A process for the preparation of a homopolymer of propylene or a copolymer of propylene with minor amounts of other $C_2$–$C_{12}$-alpha-monoolefins at from 20 to 160°C and under from 1 to 100 bar using a Ziegler-Natta catalyst system consisting of
(1) a titanium component, which may have been applied to a silicate carrier, comprising a atomic parts of titanium, b atomic parts of magnesium, c atomic parts of chlorine and d molar parts of a derivative of phthalic acid, with or without minor amounts of other components, with the proviso that
b = 4a to 50a,
c = 2a + b to 4a + 2b and
d = 0.02b to 0.40b,
(2) an aluminumalkyl of the formula AlR³, where R is alkyl of not more than 8 carbon atoms, and
(3) an alkoxy-containing silicon compound as a cocatalyst, with the provisos that the atomic ratio of titanium from the titanium component (1) to aluminum from the aluminumalkyl (2) is from 1:20 to 1:1,000 and the molar ratio of aluminumalkyl (2) to cocatalyst (3) is from 10:8 to 10:0.1,
wherein
a catalyst system is used which contains, as cocatalyst (3), a silicon compound of the composition
$(R^1_{5-n} R^2_n C_6)_x Si(OR^3)_{4-x}$,
where $C_6$ is a benzene nucleus, $R^1$ is a $C_1$–$C_{10}$-hydrocarbon radical or H, $R^2$ is a $C_1$–$C_{10}$ hydrocarbon radical, or $R^1$ and $R^2$ are each an $OR^4$ group where $R^1$ is different from $R^2$ and $R^4$ is $R^2$, $R^3$ is a $C_1$–$C_6$-hydrocarbon radical, n is from 1 to 5 and $x$ is from 1 to 3.

**Revendication**

Procédé de préparation d'homopolymères de propylène ainsi que de copolymères de propylène avec de faibles quantités d'autres α-monooléfines en $C_2$–$C_{12}$, à des températures de 20 à 160°C et des pressions de 1 à 100 bar, à l'aide d'un système catalytique Ziegler-Natta se composant de

1) un composé du titane – éventuellement supporté sur un support silicaté – formé de a parties atomiques de titane, b parties atomiques de magnésium, c parties atomiques de chlore et d parties molaires d'un dérivé de l'acide phtalique ainsi – éventuellement – que de faibles quantités d'autres constituants, à la condition que soient respectées les proportions

$b = 4.a$ à $50.a$,
$c = 2.a + b$ à $4.a + 2.b$,
$d = 0,02.b$ à $0,40.b$,

2) un alkylaluminium de formule $AlR_3$, où R est mis pour un reste alkyle ne comportant pas plus de 8 atomes de carbone, et

3) un composé du silicium comportant des groupements alcoxy en tant que co-catalyseur, à la condition que le rapport atomique du titane du composé du titane (1) à l'aluminium de l'alkylaluminium (2) soit de 1:20 à 1:1000 et que le rapport molaire de l'alkylaluminium (2) au co-catalyseur (3) soit de 10:8 à 10:0,1, caractérisé en ce qu'on introduit un système catalytique qui contient comme co-catalyseur (3) un composé du silicium de structure

$(R_{5-n}^1 R_n^2 C_6)_x Si(OR^3)_{4-x}$,

où

$C_6$ est mis pour un noyau benzénique
$R^1$ est mis pour un reste hydrocarboné en $C_1$ à $C_{10}$ ou pour H
$R^2$ est mis pour un reste hydrocarboné en $C_1$ à $C_{10}$ ou $R^1$ et $R^2$ sont mis pour un groupement $OR^4$, $R^1$ étant différent de $R^2$ et $R^4$ étant mis pour $R^2$,
$R^3$ est mis pour un reste hydrocarboné en $C_1$–$C_6$
n est mis pour un nombre compris entre 1 et 5 et
x est mis pour un nombre compris entre 1 et 3.